# EUROPEAN PATENT APPLICATION

(11) **EP 4 645 128 A2**
(43) Date of publication of application: **05.11.2025**
(21) Application number: 23910193.4
(22) Date of filing: 14.12.2023
(51) Int. Cl.: G06F 21/31, G06F 16/27, G06F 16/23, G06Q 40/04

(54) **SERVICE PERMISSION MANAGEMENT METHOD AND APPARATUS, AND DEVICE**

(30) Priority: 28.12.2022 CN 202211700396
(71) Applicant: Digital Currency Institute, The People's Bank of China, Beijing 100071 (CN)
(72) Inventor: MU, Changchun, Beijing 100071 (CN); DI, Gang, Beijing 100071 (CN); LYU, Yuan, Beijing 100071 (CN); QIAN, Youcai, Beijing 100071 (CN); SUN, Shiyue, Beijing 100071 (CN); WANG, Wenbo, Beijing 100071 (CN)
(74) Representative: Epping - Hermann - Fischer
(86) International application number: PCT/CN2023/138916
(87) International publication number: WO 2024/140263

(57) **Abstract**

A service permission management method and apparatus, and a device, which relate to the technical field of computers. The method comprises: a first electronic device monitoring a blockchain node, wherein a plurality of smart contracts corresponding to services on a one-to-one basis are stored in the blockchain node; when service permission change information is newly added to the blockchain node, the first electronic device sending a synchronization request message to the blockchain node, wherein the service permission change information is used for indicating that a service permission of a first service is changed, and service permission change information configured by a second electronic device is stored in the blockchain node; the first electronic device receiving the service permission change information from the blockchain node; and the first electronic device updating service configuration information according to the service permission change information, wherein the updated service configuration information comprises changed service permission information of the first service. The method can solve the problem of it being impossible to manage some service permissions in commercial banks.

## Description

This application claims the priority to Chinese Patent Application No. 202211700396.1 filed on December 28, 2022, which is incorporated herein by reference in its entirety.

### FIELD

The present disclosure relates to the technical field of mobile payment, and in particular to a method and an apparatus for service permission management, and a device.

### BACKGROUND

At present, in an electronic payment system of digital currency (hereinafter referred to as a payment system), a service executor may include a device of the central bank (or the monetary authority) and a device of other bank (such as a commercial bank). The device of the central bank and the device of the commercial bank are capable of executing services, such as payment, transfer, service cancellation and service supervision, through the payment system.

At present, the central bank may manage service permissions of the commercial bank through the device. For example, the central bank may use the device to add a payment service to the commercial bank and cancel a transfer service of the commercial bank.

### SUMMARY

In an aspect, a method for service permission management, applied to a first electronic device, is provided according to some embodiments of the present disclosure. The first electronic device is an electronic device of a service executor. The method includes: monitoring, by the first electronic device, a blockchain node in which multiple smart contracts corresponding one-to-one to services are stored; sending a synchronization request message by the first electronic device to the blockchain node when service permission change information is newly added to the blockchain node, where the synchronization request message is to request the service permission change information and the service permission change information is to indicate a change in a service permission for a first service; and the service permission change information configured by a second electronic device is stored in the blockchain node; receiving the service permission change information by the first electronic device from the blockchain node; and updating service configuration information by the first electronic device according to the service permission change information, where the updated service configuration information includes changed service permission information of a first service.

In some embodiments, the service configuration information includes usage permission information of a service. The method further includes: receiving a service processing request by the first electronic device, where the service processing request is to request for processing a target service; determining by the first electronic device, in response to the service processing request, usage permission information of the target service from the updated service configuration information; and sending a contract invocation request by the first electronic device to the blockchain node, when the usage permission information of the target service indicates that the target service is supported, where the contract invocation request is to request for invoking a smart contract for the target service.

In some embodiments, the service configuration information includes display permission information of a service. The updated service configuration information includes changed display permission information of a first service. The display permission information is to indicate whether to display a functional area of a service.

In some embodiments, the first electronic device updates a service interface according to the updated service configuration information. A functional area of the first service is displayed in the updated service interface, or the functional area of the first service is hidden in the updated service interface. Functional areas of services correspond one-to-one to service permissions.

In some embodiments, the first electronic device sets the display permission information of the first service in the service configuration information to a first identifier when the service permission change information indicates that the first electronic device supports the first service information. The first identifier is to indicate display of a functional area. The first electronic device sets the display permission information of the first service in the service configuration information to a second identifier when the service permission change information indicates that the first electronic device does not support the first service information. The second identifier is to indicate hiding of the functional area.

In some embodiments, the service configuration information further includes multiple functional modules, and one of the multiple functional modules corresponds to one service.

In some embodiments, the first electronic device adds a functional module for the first service when the service permission change information indicates that the first electronic device supports the first service information. The first electronic device deletes the functional module for the first service when the service permission change information indicates that the first electronic device does not support the first service.

In some embodiments, the service permission change information is further to indicate a change in a service limit permission for the first service. The service configuration information further includes limit permission information of the service and usage permission information of the service.

In some embodiments, the first electronic device updates limit permission information of the first service and usage permission information of the first service according to the service permission change information.

In some embodiments, the second electronic device is an electronic device that supervises a service usage permission of the first electronic device.

In another aspect, a method for service permission management, applied to a blockchain node, is provided according to some embodiments of the present disclosure. The blockchain node is configured to store multiple smart contracts corresponding one-to-one to services. The method includes: receiving service permission change information by the blockchain node from a second electronic device, where the service permission change information is to indicate a change in a service usage permission for a first service; storing the service permission change information by the blockchain node; receiving a synchronization request message by the blockchain node from a first electronic device, where the synchronization request message is to request the service permission change information; and sending the service permission change information by the by the blockchain node to the first electronic device, where the first electronic device is an electronic device of a service executor.

In some embodiments, the blockchain node receives a service change message from the second electronic device. The service change message is to indicate addition/revocation of a second service. The blockchain node generates a smart contract for the second service when the service change message indicates addition of the second service. The blockchain node deletes the smart contract for the second service when the service change message indicates revocation of the second service.

In another aspect, an apparatus for service permission management, applied to a first electronic device, is provided according to some embodiments of the present disclosure. The first electronic device is an electronic device of a service executor. The apparatus includes: a processing module, configured to monitor a blockchain node in which a plurality of smart contracts corresponding one-to-one to services are stored; a sending module, configured to, when service permission change information is newly added to the blockchain node, send a synchronization request message to a blockchain node, where the synchronization request message is to request service permission change information, the service permission change information is to indicate a change in a service permission for a first service, and the service permission change information configured by a second electronic device is stored in the blockchain node; and a receiving module, configured to receive the service permission change information from the blockchain node; and where the processing module is further configured to update service configuration information according to the service permission change information, and the updated service configuration information includes changed service permission information of a first service.

In another aspect, an apparatus for service permission management, applied to a blockchain node, is provided according to some embodiments of the present disclosure. The blockchain node is configured to store multiple smart contracts corresponding one-to-one to services. The apparatus for service permission management includes: a receiving module, configured to receive service permission change information from a second electronic device, where the service permission change information is to indicate a change in a service usage permission for a first service; a processing module, configured to store the service permission change information, where the receiving module is further configured to receive a synchronization request message from a first electronic device and the synchronization request message is to request the service permission change information; and a sending module, configured to send the service permission change information to a first electronic device, where the first electronic device is an electronic device of a service executor.

In another aspect, an electronic device is provided according to some embodiments of the present disclosure. The electronic device includes a processor and a memory. The memory is configured to store instructions executable by the processor. The processor is configured to, when executing the instructions, perform the method for service permission management described above.

In another aspect, a non-transitory computer-readable storage medium is provided according to some embodiments of the present disclosure. Instructions stored in the non-transitory computer-readable storage medium, when executed by a processor of an electronic device, cause the electronic device to perform the method for service permission management described above.

### BRIEF DESCRIPTION OF THE DRAWINGS

FIG. 1 is a schematic structural diagram of an implementation according to one or more embodiments;
FIG. 2 is a schematic structural diagram of another implementation according to one or more embodiments;
FIG. 3 is a flowchart of a method for service permission management according to one or more embodiments;
FIG. 4 is a schematic diagram of an interface according to one or more embodiments;
FIG. 5 is a schematic diagram of another interface according to one or more embodiments;
FIG. 6 is a schematic diagram of another interface according to one or more embodiments;
FIG. 7 is a flowchart of another method for service permission management according to one or more embodiments;
FIG. 8 is a schematic diagram of another interface according to one or more embodiments;
FIG. 9 is a flowchart of another method for service permission management according to one or more embodiments;
FIG. 10 is a flowchart of another method for service permission management according to one or more embodiments;
FIG. 11 is a flowchart of another method for service permission management according to one or more embodiments;
FIG. 12 is a flowchart of another method for service permission management according to one or more embodiments;
FIG. 13 is a block diagram of an apparatus for service permission management according to one or more embodiments;
FIG. 14 is a block diagram of another apparatus for service permission management according to one or more embodiments; and
FIG. 15 is a block diagram of an electronic device according to one or more embodiments.

### DETAILED DESCRIPTION

Technical solutions of some embodiments of the present disclosure are clearly and completely described below with reference to the accompanying drawings. Apparently, the embodiments described are only some embodiments of the present disclosure, rather than all embodiments. Any other embodiments obtained by those skilled in the art based on the embodiments of the present disclosure shall fall within the protection scope of the present disclosure.

Unless the context otherwise requires, throughout the specification and claims, the term "comprise" and other forms thereof, such as the third-person singular form "comprises" and the present participle form "comprising" shall be construed as open and inclusive, meaning "comprising, but not limited to." In the description of the specification, the terms "one embodiment," "some embodiments," "exemplary embodiments," "example," "specific example," "some examples," and the like are intended to indicate that specific features, structures, materials, or characteristics related to the embodiment or example is included in at least one embodiment or example of the present disclosure. The illustrative representations of the above terms do not necessarily refer to the same embodiment or example. Furthermore, the specific features, structures, materials, or characteristics described may be included in any one or more embodiments or examples in any suitable manner.

In the following, the terms "first", "second" and the like are only for purpose of description, and should not be interpreted as indicating or implying relative importance or implying the number of the indicated technical features. Therefore, the features defined by "first" and "second" may explicitly or implicitly include one or more of the features. In the description of the embodiments of the present disclosure, unless otherwise specified, "multiple" means two or more.

In the description of some embodiments, the expressions "coupled" and "connected" and their derivatives may be used. For example, the term "connected" may be used in the description of some embodiments to indicate that two or more components are in direct physical or electrical contact with each other. For another example, the term "coupled" may be used in the description of some embodiments to indicate that two or more components are in direct physical or electrical contact with each other. The term "coupled" and "communicatively coupled" may indicate that two or more components that are not in direct contact with each other but still cooperate or interact with each other. The embodiments disclosed herein are not necessarily limited to the content provided herein.

"At least one of A, B and C" has the same meaning as "at least one of A, B, or C". Both of the expressions include the following: only A, only B, only C, a combination of A and B, a combination of A and C, a combination of B and C, and a combination of A, B, and C.

"A and/or B" includes the following three combinations: only A, only B, and a combination of A and B.

As used herein, depending on the context, the term "if" is optionally interpreted as "when", "upon", "in response to determining", or "in response to detecting". Similarly, depending on the context, the phrase "if it is determined that..." or "if [the described condition or event] is detected" is optionally interpreted as "upon determining..." or "in response to determining...", or "upon detecting [the described condition or event]" or "in response to detecting [the described condition or event]".

The use of "applicable to" or "configured to" herein are construed as open and inclusive, which does not exclude devices that are applicable to or configured to perform additional tasks or steps.

Additionally, the use of "based on" is construed as open and inclusive, since a process, a step, a calculation or other action that is "based on" one or more described conditions or values may, in practice, be based on an additional condition or a value beyond those specified.

Before detailing a method for service permission management according to some embodiments of the present disclosure, relevant elements, application scenarios, and implementation environments involved in some embodiments of the present disclosure are briefly introduced.

First, elements involved in some embodiments of the present disclosure are briefly introduced.

1. Central bank: A central bank is the dominant central financial institution. The central bank may formulate and implement national monetary and credit policies, holds authority over currency issuance, and conducts financial regulation, including regulation on commercial banks.

2. Commercial bank: A commercial bank is a type of bank that may provide services such as deposits, loans, remittances, savings, and so on. In an electronic payment system of digital currency, the commercial bank may act as a service executor and is supervised by the central bank (or monetary authority).

Second, application scenarios involved in some embodiments of the present disclosure are briefly introduced.

In related art, in a payment system, the central bank may act as a service executor and a regulator that supervises commercial banks. The central bank may manage services of commercial banks, for example, the central bank adds a payment service to a commercial bank or cancels a transfer service of the commercial bank. However, in the current technical solution, functions provided by a commercial bank are not split by service type and are managed as a whole in a unified way. All commercial banks use the same set of configurations. When it is required to adjust the service permissions of the commercial banks, customized management and configuration cannot be carried out according to the situation. Moreover, when the permission function is adjusted, the system interface cannot be updated in time. As a result, the service functional area in the system interface mismatches services managed by the commercial bank, affecting use experience of the commercial bank.

This solution adopts a modular design concept in which an integrated function is split into multiple relatively independent functions. Different function modules are reflected in a menu management interface, and each functional module includes several sub-functions, enabling separate management, configuration, and display of the relatively independent sub-functions, and realizing customized management of permissions for different commercial banks.

A method for service permission management is provided according to some embodiments of the present disclosure. According to the method, a first electronic device monitors a blockchain node in which multiple smart contracts corresponding one-to-one to services are stored. When service permission change information is newly added to the blockchain node, the first electronic device sends a synchronization request message to the blockchain node. The synchronization request message is to request service permission change information. The service permission change information indicates a change in a service permission for a first service. The blockchain node stores service permission change information configured by a second electronic device. The first electronic device receives the service permission change information from the blockchain node. The first electronic device updates service configuration information according to the service permission change information. The updated service configuration information includes changed service permission information of the first service.

According to the above technical solution, a first electronic device monitors a blockchain node in which multiple smart contracts corresponding one-to-one to services are stored. That is, the blockchain node may separate services individually so that one service corresponds to one smart contract, and the smart contract may perform the corresponding service. When service permission change information is newly added to the blockchain node, the first electronic device may send a synchronization request message to the blockchain node to request the service permission change information. Further, the blockchain node stores service permission change information configured by a second electronic device. That is, the second electronic device may configure the service permission information for the first electronic device through the blockchain node. The first electronic device receives the service permission change information from the blockchain node. Then, the first electronic device may adjust only service permission information of a first service in connection with the service permission change information. In this way, the second electronic device may manage part of service permissions of the first electronic device, so as to realize customized management of permissions of different commercial banks, thereby improving use experience of the commercial banks.

Finally, implementation environments (implementation architectures) involved in some embodiments of the present disclosure are briefly introduced.

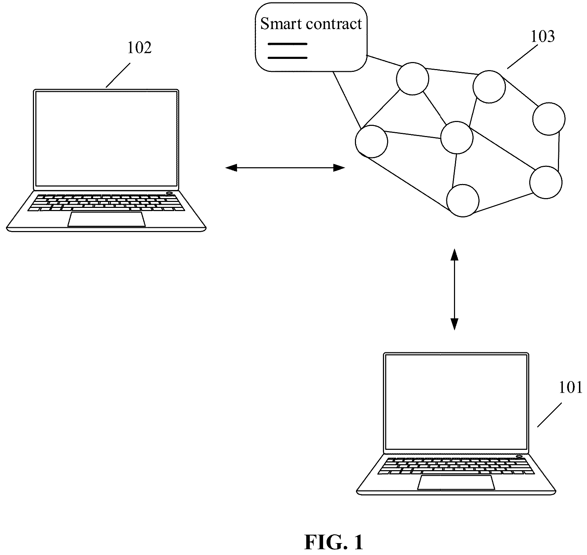

Reference is made to FIG. 1, which shows a communication system provided according to an embodiment of the present disclosure. The communication system includes multiple electronic devices and a blockchain system. In an example, the multiple electronic devices may include at least one first electronic device 101 and at least one second electronic device 102, and the blockchain system may include at least one blockchain node 103.

In an embodiment of the present disclosure, the first electronic device 101 and the second electronic device 102 may be electronic devices of a service executor (such as a commercial bank or a financial institution).

In some embodiments, the second electronic device 102 may be an electronic device of a regulator, such as the central bank or the monetary authority. The second electronic device 102 may manage service permissions of the first electronic device 101. The first electronic device 101 may be connected to the blockchain node 103 by wire, the second electronic device 102 may be connected to the blockchain node 103 by wire, and the first electronic device 101 may be connected to the second electronic device 102 by wire or wirelessly.

The first electronic device 101 may handle a variety of services, such as deposit, loan, remittance, savings and the like. The first electronic device 101 may include multiple functional modules, with one functional module corresponding to one service, and the functional modules may execute related services. The first electronic device 101 may display a service interface. The service interface includes multiple service functional areas. A staff of a service executor may perform an input operation on the service functional area to trigger the first electronic device 101 to handle the corresponding service. For example, the first electronic device 101 may send a request for invoking a smart contract to the blockchain node 103, so that the blockchain node 103 invokes the smart contract for the service.

The second electronic device 102 may manage service permissions of the service executor. In an example, the second electronic device 102 may add or revoke service permissions of the first electronic device 101. For example, an electronic device of the central bank adds a payment service permission of an electronic device of a commercial bank and revokes a transfer service permission of the electronic device of the commercial bank. Alternatively, the second electronic device 102 may change a service limit of the first electronic device 101. For example, the second electronic device 102 may change a service limit of service A managed by the first electronic device 101 to 10000.

The blockchain node 103 may store multiple evidence preservation transactions. The evidence preservation transactions may include: change information of a service usage permission (such as support for handling service, non-support for handling service, or change in the service limit), information of a service to be handled, permission information and the like. The blockchain node 103 may further be deployed with smart contracts for services and may manage the smart contracts for services. For example, the blockchain node 103 may receive, from the second electronic device 102, a service management message, for adding or deleting a smart contact for the service. The blockchain node 103 may further handle the services. When the blockchain node 103 receives a request for invoking a smart contract, the blockchain node 103 executes contract codes corresponding to the smart contract for the service.

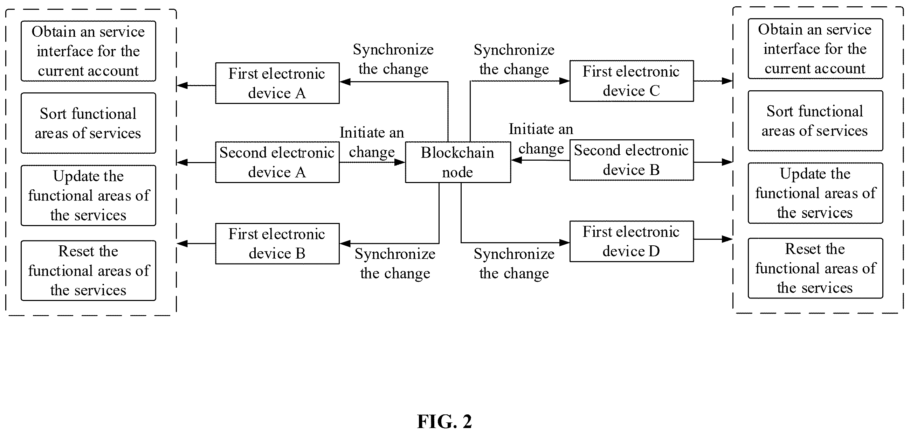

In an example, as shown in FIG. 2, a communication system includes multiple electronic devices and a blockchain system. The multiple electronic devices may include: a first electronic device A, a first electronic device B, a first electronic device C, a first electronic device D, a second electronic device A, and a second electronic device B. The second electronic device A and the second electronic device B may change, through the blockchain node, service interfaces (such as sorting service functional areas, displaying service functional areas, and so on) of the first electronic device A, the first electronic device B, the first electronic device C, and the first electronic device D. The multiple electronic devices may implement customized function of the service interfaces (such as obtaining the service interfaces for the current account, sorting service functional areas, updating the service functional areas, and resetting the service functional areas).

It should be noted that the electronic devices are not limited in the present disclosure. For example, the electronic devices may be terminals. For another example, the electronic devices may be servers. The blockchain node may be a server.

A terminal may be a device capable of transmitting and receiving. The terminal may be deployed on land, including an indoor terminal, an outdoor terminal, a handheld terminal, or a vehicle-mounted terminal. The terminal may be also deployed on the water, such as on ships, or deployed in the air, such as on an aircraft, a balloon, or a satellite). The terminal includes a handheld device, a vehicle-mounted device, a wearable device, or a computing device, which is capable of wireless communication. In an example, the terminal may include a mobile phone, a tablet or a computer capable of wireless transmitting and receiving. The terminal device may also include a virtual reality (VR) terminal device, an augmented reality (AR) terminal device, a wireless terminal for industrial control, a wireless terminal for unmanned driving, a wireless terminal for telemedicine, a wireless terminal for a smart grid, a wireless terminal for a smart city, a wireless terminal for a smart home or the like.

The server may include a physical server or a cloud server. The server may be any server or server cluster, which is not limited in the present disclosure.

In addition, it should be noted that user information, including but not limited to user equipment information, user personal information, user bank card information and the like, involved in some embodiments of the present disclosure is authorized by the user or sufficiently authorized by all parties.

To facilitate understanding, a method for service permission management provided according to some embodiments of the present disclosure is described below in conjunction with the drawings.

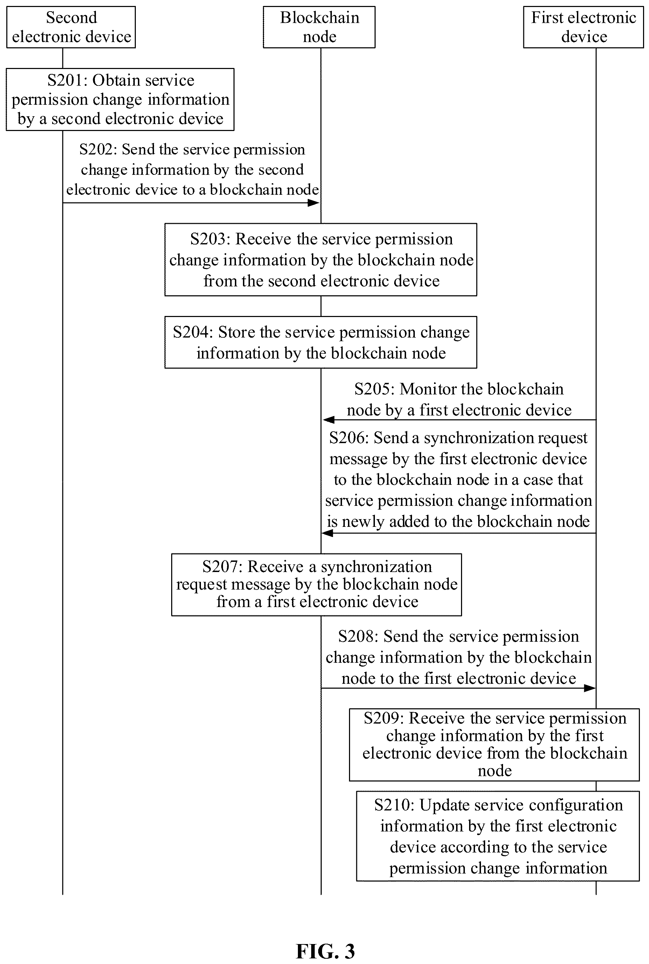

FIG. 3 is a flowchart of a method for service permission management according to one or more embodiments. The method is applied to an electronic device. Alternatively, the method is applied to a client installed on the electronic device or an application installed on the electronic device. As shown in FIG. 3, the method for service permission management includes the following steps S201 to S210.

In step S201, service permission change information is obtained by a second electronic device.

In some embodiments of the present disclosure, the service permission change information is to indicate a change in a service usage permission for a first service. The second electronic device is an electronic device of a regulator.

It should be noted that the fact that the service permission change information is to indicate a change in a service usage permission for a first service means that the permission change information is information indicating a change in the service usage permission for the first service.

In an embodiment of the present disclosure, the second electronic device manages service usage permissions on multiple services, and the first service is any one of the multiple services.

In some embodiments, the second electronic device is configured to supervise service usage permissions of a first electronic device.

In some embodiments, the second electronic device may receive a permission change operation of a user. The permission change operation is to trigger adjustment of the service usage permission for the first service. In response to the permission change operation, the second electronic device may generate service permission change information.

It should be noted that the fact that the permission change operation is to trigger adjustment of the service usage permission for the first service means that the permission change operation is an operation of triggering the adjustment of the service usage permission for the first service.

In an example, a permission change operation of a user is to trigger cancellation of the usage permission for a transfer service, and the second electronic device generates service permission change information. The service permission change information is to indicate that the usage permission for the transfer service is revoked, that is, the transfer service cannot be processed.

In some embodiments, the service permission change information may include: identifier of the first service and usage permission information of the first service. The usage permission information includes a first usage permission identifier or a second usage permission identifier. The first usage permission identifier is to indicate that service processing is supported, and the second usage permission identifier is to indicate that service processing is not supported.

It should be noted that the fact that the first usage permission identifier is to indicate that service processing is supported means that the first usage permission identifier is an identifier indicating that service processing is supported. The fact that the second usage permission identifier is to indicate that the service processing is not supported means that the second usage permission identifier is an identifier indicating that service processing is not supported.

For example, in a case that service permission change information includes a service identifier A and the first usage permission identifier (for example, "0"), the service permission change information is to indicate that processing of a service corresponding to the service identifier A is supported. In a case that the service permission change information includes the service identifier A and the second usage permission identifier (for example, "1"), the service permission change information is to indicate that processing of the service corresponding to the service identifier A is not supported.

In some embodiments, the service permission change information may include an identification of a target device. The target device is an electronic device (such as a second electronic device) managed by a regulator, and a first electronic device is an electronic device of a service executor.

For example, in a case that the service permission change information includes an identification of a device A, the service identifier A and the first usage permission identifier (for example, "0"), the service permission change information is to indicate that processing of a service corresponding to the service identifier A by the device A is supported.

In some embodiments, a second electronic device stores service usage permission information of multiple services. After the second electronic device obtains service permission change information, the second electronic device may update the stored service usage permission information.

In step S202, the service permission change information is sent by the second electronic device to a blockchain node.

In some embodiments, the second electronic device may send a first evidence preservation transaction to the blockchain node. The first evidence preservation transaction includes service permission change information.

In some embodiments, the service permission change information may also include an identification of the second electronic device.

In step S203, the service permission change information is received by the blockchain node from the second electronic device.

In step S204, the service permission change information is stored by the blockchain node.

In some embodiments, the blockchain node may upload the first evidence preservation transaction to a blockchain through a consensus process and store the first evident preservation transaction.

In step S205, the blockchain node is monitored by a first electronic device.

In some embodiments, the first electronic device may periodically send a first monitoring request message to the blockchain node. The first monitoring request message is to request monitoring of a newly added evidence preservation transaction related to the first electronic device.

In some embodiments, the monitoring request message may include an identification of the first electronic device.

In some embodiments, the monitoring request message may also include a predetermined time period.

It should be noted that the predetermined period may be adjusted periodically. In an example, the predetermined time period may include: 10:00-11:00, 11:00-12:00, and/or 12:00-13:00.

In some embodiments, in a case that service permission change information is newly added to the blockchain node, the first electronic device may obtain an identification of a newly added evidence preservation transaction through monitoring the blockchain node.

In step S206, a synchronization request message is sent by the first electronic device to the blockchain node in a case that service permission change information is newly added to the blockchain node.

In some embodiments of the present disclosure, the synchronization request message is to request service permission change information, and the service permission change information is to indicate a change in the service usage permission for a first service.

In an embodiment of the present disclosure, the blockchain node stores service permission change information configured by the second electronic device.

In some embodiments, the first electronic device may determine whether service permission change information related to the first electronic device is newly added to the blockchain node through monitoring the blockchain node. In a case that the first electronic device determines that the service permission change information is newly added to the blockchain node, the first electronic device sends a synchronization request message to the blockchain node.

In an example, it is assumed that service permission change information A and service permission change information B are stored on the blockchain node. In a case that service permission change information C is newly added to the blockchain node and the service permission change information C is information related to the first electronic device, the first electronic device may send a synchronization request message to the blockchain node to request for obtaining the service permission change information C.

In step S207, the synchronization request message is received by the blockchain node from the first electronic device.

In some embodiments, the synchronization request message may include an identification of a first evidence preservation transaction. After the blockchain node receives the synchronization request message from the first electronic device, the blockchain node may determine service permission change information based on the identification of the first evidence preservation transaction.

In step S208, the service permission change information is sent by the blockchain node to the first electronic device.

In some embodiments, the blockchain node may send the first evidence preservation transaction to the first electronic device.

In step S209, the service permission change information is received by the first electronic device from the blockchain node.

In step S210, service configuration information is updated by the first electronic device according to the service permission change information.

In an embodiment of the present disclosure, the updated service configuration information may include changed service permission information of a first service.

In some embodiments, service configuration information may include display permission information of a service. The display permission information is to indicate whether to display a functional area of the service, that is, service permission information includes display permission information of the service.

In some embodiments, a first electronic device stores display permission information of multiple services. The display permission information may be a first identifier or a second identifier. The first identifier is to indicate displaying a functional area. The second identifier is to indicate hiding the functional area, that is, not displaying the functional area of the service.

It should be noted that the form in which the display permission information is represented is not limited in the present disclosure. For example, the display permission information may be represented by numerals, including 0 for the first identifier and 1 for the second identifier. For another example, the display permission information may be represented by letters, including a for the first identifier and b for the second identifier.

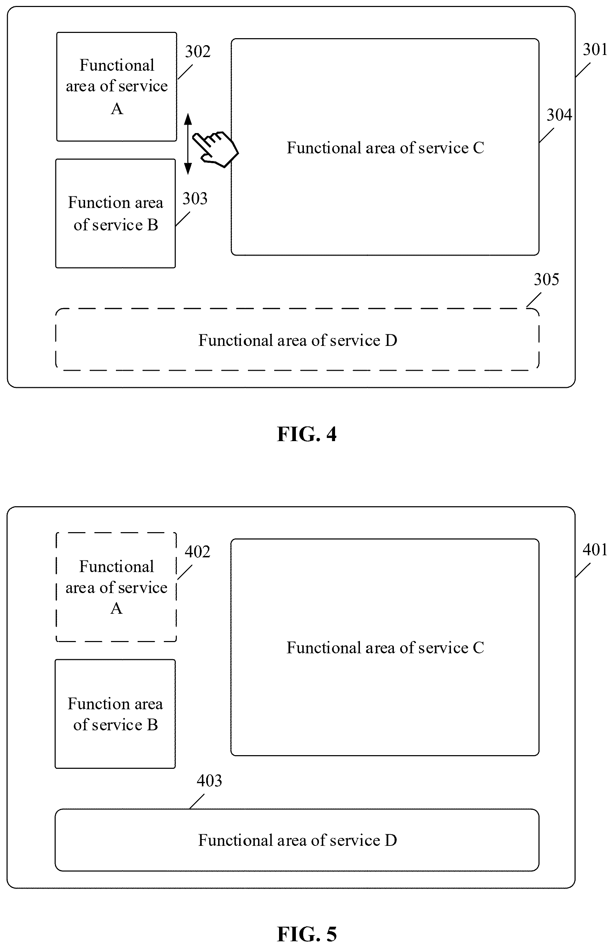

In an example, as shown in FIG. 4, display permission information of a service A, a service B, and a service C is the first identifier, and display permission information of a service D is the second identifier. A service interface 301 of a first electronic device may display a functional area 302 of the service A, a functional area 303 of the service B, and a functional area 304 of the service C, and hide a functional area 305 of the service D, that is, the area framed by dotted lines is not displayed in the service interface 301.

In an embodiment of the present disclosure, updated service configuration information includes changed service permission information of a first service.

In some embodiments, a first electronic device updates display permission information of a service according to service permission change information. In a case that the service permission change information indicates that the first electronic device supports the first service, the first electronic device sets display permission information of the first service in service configuration information to the first identifier. In a case that the service permission change information indicates that a service executor does not support the first service, the first electronic device sets the display permission information of the first service in the service configuration information to the second identifier.

In an example, the first electronic device does not support the first service, and the display permission information of the first service is the second identifier. In a case that the service permission change information indicates that the first electronic device supports the first service, the display permission information of the first service is changed to the first identifier, that is, the display permission information of the first service in the changed service configuration information is changed to the first identifier.

It should be noted that, in an embodiment of the present disclosure, the fact that the first electronic device supports the first service indicates that the first electronic device has permission to process the first service, that is, a staff may process the first service by using the first electronic device. The fact that the service executor does not support the first service indicates that the first electronic device has no permission to process the first service, that is, the staff is not allowed to process the first service by using the first electronic device.

It should be understood that if the service permission change information indicates that the first electronic device supports the first service, the display permission information of the first service in the service configuration information is set to the first identifier; if the service permission change information indicates that the service executor does not support the first service, the display permission information of the first service in the service configuration information is set to the second identifier. That is, the service executor may adjust the display permission for a service in connection with the usage permission for the service. In this way, a regulator may dynamically adjust a service interface of a service executor by adjusting the usage permission for a service of the service executor, so as to achieve the purpose of customized supervision of the service executor by the regulator.

According to the above technical solution, a first electronic device monitors a blockchain node in which multiple smart contracts corresponding one-to-one to services are stored. That is, the blockchain node may separate services individually so that one service corresponds to one smart contract. The smart contracts may perform the corresponding services. In a case that service permission change information is newly added to the blockchain node, the first electronic device may send a synchronization request message to the blockchain node to request the service permission change information. The service permission change information is to indicate a change in a service permission for a first service. Further, the blockchain node stores service permission change information configured by a second electronic device. That is, the second electronic device may configure service permission information for the first electronic device through the blockchain node. The first electronic device receives the service permission change information from the blockchain node. Then, the first electronic device may adjust only service permission information of the first service in connection with the service permission change information. In this way, the second electronic device may manage part of service permissions of the first electronic device, so as to realize customized management of permissions of different commercial banks, thereby improving use experience of the commercial banks.

In some embodiments, the first electronic device may update a service interface based on updated service configuration information.

In an embodiment of the present disclosure, the service interface includes a functional area of at least one service, and functional areas of all services correspond one-to-one to service permissions. A functional area of a first service is displayed in the updated service interface, or the functional area of the first service is hidden in the updated service interface.

It should be understood that the first electronic device updates the service interface according to the updated service configuration information. In this way, a second electronic device may adjust the service interface of the first electronic device by adjusting the service usage permission of the first electronic device, so that a functional area of the service displayed in the service interface is aligned with the service usage permission. Thus, the second electronic device can manage the service interface of the first electronic device.

In some embodiments, in a case that changed display permission information of a first service indicates displaying a functional area of a first service, the first electronic device displays a functional area of the first service in a service interface; and in a case that the changed display permission information of the first service indicates hiding the functional area of the first service, the first electronic device hides the functional area of the first service in the service interface.

For example, in conjunction with FIG. 4, referring to FIG. 5, in a case that changed display permission information of the service A indicates hiding a functional area of the service A, a functional area 402 of the service A is hidden in a service interface 401. In a case that the changed display permission information of the service D indicates displaying a functional area of the service D, a functional area 403 of the service D is displayed in the service interface 401.

It should be understood that in a case that changed display permission information of a first service indicates displaying a functional area of the first service, the first electronic device displays a functional area of the first service in a service interface. In a case that the changed display permission information of the first service indicates hiding the functional area of the first service, the first electronic device hides the functional area of the first service in the service interface. That is, the first electronic device may adjust the service interface according to the display permission information. In this way, in a case that the first service is not supported, the first electronic device hides the functional area of the first service so that processing of the first service cannot be triggered; in a case that the first service is supported, the first electronic device displays the functional area of the first service and processing of the first service can be triggered.

In some embodiments, service configuration information also includes multiple functional modules, with one functional module corresponding to one service. A functional module is configured to perform a service corresponding to the functional module.

In an example, a first electronic device may include a transfer functional module, and the transfer functional module may perform a transfer service.

In an embodiment of the present disclosure, the updating service configuration information by the first electronic device according to service permission change information may also include: in a case that the service permission change information indicates that the first electronic device supports the first service, the first electronic device adds a functional module for the first service. In a case that the service permission change information indicates that the first electronic device does not support the first service, the first electronic device deletes the functional module for the first service.

In an example, in a case that the first electronic device currently does not support the transfer service and service permission change information indicates that the first electronic device supports a transfer service, the first electronic device may add the transfer functional module. In a case that the first electronic device currently supports a supervision service (that is, service configuration information includes the functional module corresponding to the supervision service) and the service permission change information indicates that the first electronic device does not support the supervision service, the first electronic device may delete the functional module corresponding to the supervision service.

In some embodiments, a functional module may correspond to one service combination, which may include multiple services. That is, multiple services may be combined as one service combination performed by one functional module.

In an example, a functional module A may support a transfer service and a deposit service.

In this way, it may facilitate the simultaneous update functional modules corresponding to certain services in the first electronic device, improving the update efficiency.

It should be noted that in a case that a second electronic device adjusts a service usage permission of the first electronic device, only a service interface of the first electronic device may be adjusted, and through the service interface, a service usage permission of the first electronic device is managed. However, only adjusting the service interface can still cause the first electronic device to be unable to process a service in accordance with the adjusted service usage permission.

In some embodiments, service configuration information also includes usage permission information of a service. The usage permission information of the service includes a first usage permission identifier or a second usage permission identifier. The first usage permission identifier is to indicate that processing of the service is supported, and the second usage permission identifier is to indicate that processing of the service is not supported.

It should be noted that the fact that the first usage permission identifier is to indicate that processing of the service is supported means that the first usage permission identifier is an identifier that indicates support for processing the service. The fact that the second usage permission identifier is to indicate that processing of the service is not supported means that the second usage permission identifier is an identifier that indicates lack of support for processing the service.

In an embodiment of the present disclosure, the updating service configuration information by the first electronic device according to service permission change information may also include: in a case that the service permission change information indicates that the first electronic device supports a first service, the first electronic device sets usage permission information of the first service to the first usage permission identifier. In a case that the service permission change information indicates that a service executor does not support the first service, the first electronic device sets the usage permission information of the first service to the second usage permission identifier.

In some embodiments, the service permission change information is also information that indicates a change in the service limit permission for the first service. The service permission change information also includes at least one of a first limit threshold or a second limit threshold. The second limit threshold is greater than the first limit threshold. The first limit threshold is the minimum limit for the first service, and the second limit threshold is the maximum limit for the first service. Service configuration information also includes limit permission information of a service.

In an embodiment of the present disclosure, the updating the service configuration information by the first electronic device according to service permission change information may also include the following: the first electronic device may update limit permission information of the first service based on the first limit threshold and/or the second limit threshold.

In an example, it is assumed that the first limit threshold of a service A is 100,000, and the second limit threshold of the service A is 1 million. In service permission change information, the first limit threshold of the service A is 50,000, and the second limit threshold of the service A is 2 million. Thus, the updated limit permission information of the service A includes 50,000 and 2 million.

In some embodiments, the service configuration information also includes limit permission information of a service and usage permission information of the service. The updating service configuration information by the first electronic device according to service permission change information also includes the following: the first electronic device may update limit permission information and usage permission information of a first service according to the service permission change information.

It should be understood that the service configuration information also includes: limit permission information of a service and usage permission information of the service. The first electronic device updates the limit permission information and the usage permission information of the first service according to the service permission change information. In this way, the first electronic device can adjust a limit and the usage permission for a service, enhancing management of the first electronic device by the second electronic device.

In some embodiments, after updating service configuration information, the first electronic device may determine whether to process a service according to the updated service configuration information.

In an embodiment of the present disclosure, a blockchain node stores smart contracts for multiple services, and the smart contract stores a processing event of a service. The first electronic device may receive a service processing request. The service processing request is to request for processing a target service and includes an amount of the target service. The target service may be any one of the multiple services. In response to the service processing request, the first electronic device may determine limit permission information and usage permission information of the target service from updated service configuration information. Thereafter, the first electronic device may determine whether the target service satisfies a predetermined condition. The predetermined condition includes: the usage permission for the service being a first usage permission identifier (that is, the service is supported), a limit of the service being greater than a first limit threshold, and/or the limit of the service being less than a second limit threshold.

In some embodiments, the first electronic device sends a contract invocation request to a blockchain node, in a case that the usage permission information of the target service indicates that the target service is supported and an amount of the target service meets a condition for the limit permission information of the target service. The contract invocation request is to request for invoking the smart contract for the target service.

In some embodiments of the present disclosure, an amount of the target service meeting a condition for the limit permission information of the target service means that the amount of the target service is greater than the first limit threshold, and/or the amount of the target service is less than the second limit threshold. Invoking the smart contract for the target service refers to processing the target service.

In an example, it is assumed that the target service is the service A, and an amount of the service A is 150,000. In a case that usage permission information of the service A includes a first usage permission identifier, a first limit threshold of the service A is 50,000, and a second limit threshold of the service A is 1 million, the first electronic device invokes the smart contract for the service A.

In some embodiments, in a case that the usage permission information of the target service indicates that the target service is not supported, and/or the amount of the target service does not meet the condition for the limit permission information of the target service, the first electronic device issues a failure prompt message which indicates that the target service fails to be processed.

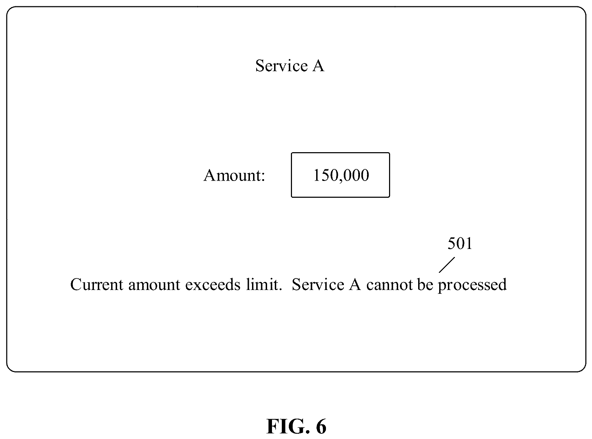

In an example, as shown in FIG. 6, it is assumed that the target service is the service A, and the amount of the service A is 150,000. In a case that the usage permission information of the service A includes a first usage permission identifier, the first limit threshold of the service A is 50,000, and the second limit threshold of the service A is 100,000, the first electronic device issues a prompt message 501, for example, the prompt message 501 may be "Current amount exceeds limit. Service A cannot be processed". Alternatively, it is assumed that the target service is the service A, and the amount of the service A is 150,000. In a case that the usage permission information of the service A includes a second usage permission identifier, a first limit threshold of the service A is 50,000, and a second limit threshold of the service A is 1 million, the first electronic device issues a prompt message, such as "Service A is currently not supported".

In some embodiments, the first electronic device may receive a service processing request. The service processing request is to request for processing a target service. In response to the service processing request, the first electronic device may determine usage permission information of the target service from updated service configuration information. In a case that the usage permission information of the target service indicates that the target service is supported, the first electronic device may send a contract invocation request to a blockchain node. The contract invocation request is to request for invoking a smart contract for the target service.

In some embodiments, the blockchain node may receive a contract invocation request from the first electronic device. Then, the blockchain node may invoke the smart contract for the target service and execute the smart contract for the target service.

In some embodiments, after executing the smart contract for the target service, the blockchain node may generate a second evidence preservation transaction. The second evidence preservation transaction may include information about execution of the smart contract for the target service. That is, the second evidence preservation transaction may include a result of processing the target service.

In other embodiments, the blockchain node may receive a contract invocation request from the first electronic device. Then, the blockchain node may send the smart contract for the target service to the first electronic device. Afterwards, the first electronic device may invoke the smart contract for the target service and execute the smart contract for the target service.

It should be noted that, in an embodiment of the present disclosure, a smart contract stores a processing event of a service. Therefore, by executing the smart contract for the target service, the processing event of the target service may be executed, that is, the target service is processed.

According to the above technical solution, the first electronic device verifies whether the smart contract for the target service can be invoked, that is, whether the target service can be processed, using the limit permission information and the usage permission information of the target service. In this way, it is possible to enhance the first electronic device's execution of the service in accordance with the permission.

In some embodiments, a second electronic device may adjust smart contracts for services on a blockchain node. The second electronic device may send a service change message to the blockchain node. The service change message is a message that indicates addition/revocation of a second service.

It should be noted that the fact that the service change message is a message that indicates addition/revocation of a second service means that the service change message is to indicate addition/revocation of the second service.

Thereafter, the blockchain node may receive the service change message from the second electronic device. Then, the blockchain node may determine whether the service change message indicates addition/revocation of the second service or not. In a case that the service change message indicates adding the second service, the blockchain node generates a smart contract for the second service. In a case that the service change message indicates revoking the second service, the blockchain node deletes the smart contract for the second service.

In some embodiments, the service change message may include an identification of the second service and a processing event of the second service. In a case that the service change message indicates adding the second service, the blockchain node generates the smart contract for the second service based on the identification of the second service and the processing event of the second service.

In some embodiments, the service change message may also include usage permission information of the second service by a device of a service executor.

In another possible implementation, the service change message may include the identification of the second service. In a case that the service change message indicates revoking the second service, the blockchain node deletes the smart contract for the second service based on the identification of the second service.

It should be understood that the blockchain node receives a service change message from the second electronic device. The service change message is to indicate addition/revocation of the second service. In this way, the blockchain node can adjust a smart contract for a service based on a service change message from the second electronic device, enhancing the management of the service in the system by the second electronic device.

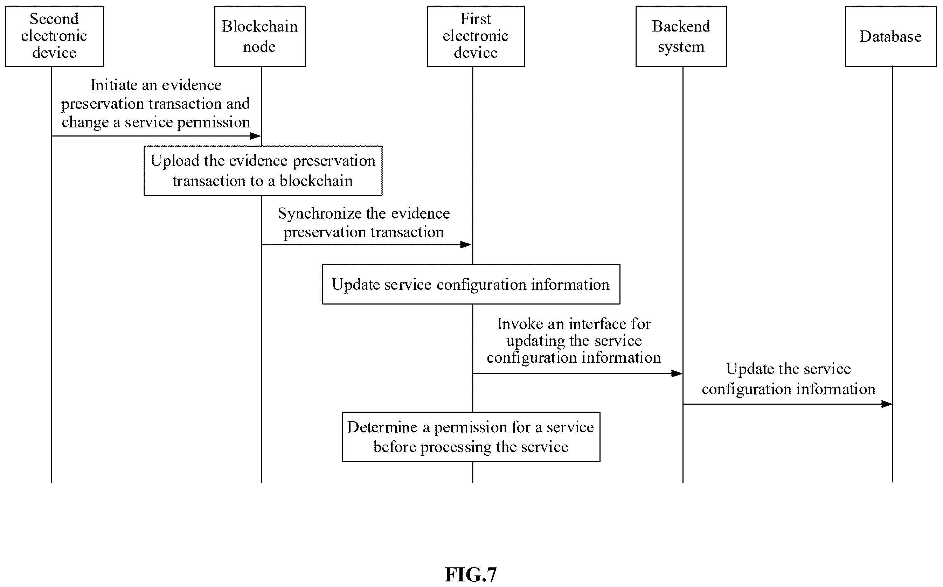

The following describes a method for service permission management according to the embodiments of the present disclosure in conjunction with examples. As shown in FIG. 7, a second electronic device may initiate an evidence preservation transaction and change a service usage permission. After that, the blockchain node may upload the evidence preservation transaction to a blockchain. Further, a first electronic device may monitor the blockchain node, synchronize the evidence preservation transaction, and update service configuration information (such as service usage permission and display permission information) of the first electronic device. The first electronic device may invoke an interface for updating the service configuration information, and a backend system of the first electronic device may update a database to synchronize the service configuration information. Then, when the first electronic device processes a service, the relevant permissions of the first electronic device may be verified.

It should be noted that after the first electronic device updates a service interface, a service functional area may be newly added to the service interface or a service functional area may be hidden in the service interface, which might result in disorder in the service interface.

In some embodiments, a service interface includes functional areas of multiple services. The first electronic device may receive an interface configuration operation of a user. The interface configuration operation is to adjust a layout of the functional areas of the multiple services in the service interface. In response to the interface configuration operation of the user, the first electronic device may adjust the layout of the functional areas of the multiple services in the service interface.

In some embodiments of the present disclosure, adjusting the layout of the functional areas of the multiple services in the service interface refers to adjusting an order, positions, sizes, or the like of the functional areas of the multiple services in the service interface.

It should be noted that the interface configuration operation is not limited in the present disclosure. For example, the interface configuration operation may be a drag-and-drop operation (which may adjust the order or positions of the functional areas). For another example, the interface configuration operation may be a zooming operation (which may adjust the sizes of the functional areas). For another example, the interface configuration operation may be an operation of inputting an adjustment parameter (which may adjust the sizes of the functional areas).

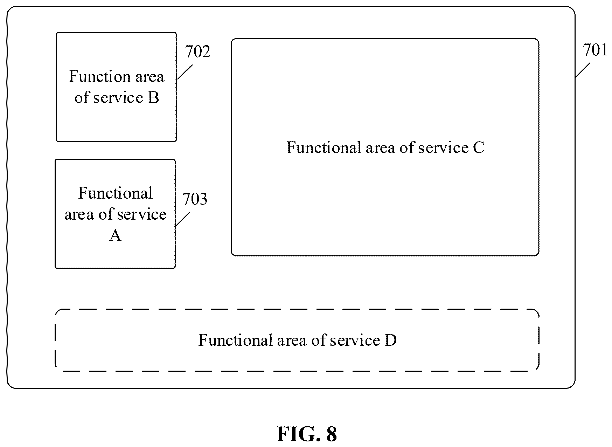

In an example, in conjunction with FIG. 4, the functional area 302 of the service A displayed in the interface 301 is above the functional area 303 of the service B. In response to the interface configuration operation (for example, the drag-and-drop operation), as shown in FIG. 8, a functional area 703 of the service A displayed in a service interface 701 is below a functional area 702 of the service B.

It should be understood that in response to the interface configuration operation of the user, the first electronic device may adjust the layout of the functional areas of the multiple services in the service interface. In this way, a user of the first electronic device can adjust a layout of the service interface as required.

In some embodiments, after the first electronic device may adjust the layout of the functional areas of the multiple services in the service interface, the first electronic device may update service configuration information. The service configuration information may also include service layout information which indicates a layout for a service.

In an example, the service layout information may indicate an order of the functional areas of the services. As shown in table 1, table 1 lists service layout information of services.

**Table 1**

| Functional Areas of Services | Layout Information of Service |
|---|---|
| Function area of service A | 0 |
| Function area of service B | 1 |
| Function area of service C | 2 |

In a case that table 1 shows the service layout information of services in the service interface shown in FIG. 4, it can be seen from table 1 and FIG. 4 that service layout information of the service A is "0", and service layout information of the service B is "1", and this indicates that the functional area of the service A is above the functional area of the service B. Service layout information of the service C is "2", and this indicates that the functional area of the service C is arranged in a right area on the service interface.

In an embodiment of the present disclosure, after the first electronic device adjusts the layout of the functional areas of the multiple services in the service interface, layout change information may be generated. The layout change information is to indicate a change in the layout of the functional areas of the services. Thereafter, the first electronic device may update service layout information based on the layout change information.

In an example, in conjunction with FIG. 4 and FIG. 8, in a case that the functional area 302 of the service A displayed in the interface 301 is changed from a position above the functional area 303 of the service B in the service interface 301 to a position below the functional area 702 of the service B in the service interface 701 shown in FIG. 8, the layout change information includes the service layout information "1" of the service A and the service layout information "0" of the service B. Thereafter, the first electronic device may change service layout information of the service A and the service B.

In an example. As shown in table 2, table 2 lists the updated service layout information.

**Table 2**

| Functional Areas of Services | Layout Information of Service |
|---|---|
| Function area of service A | 1 |
| Function area of service B | 0 |
| Function area of service C | 2 |

In conjunction with table 1, table 2 lists the updated service layout information (corresponding to the service interface shown in FIG. 8). The service layout information of the service A is "1" and the service layout information of the service B is "0", and this indicates that the functional area of the service B is above the functional area of the service A.

In some embodiments, when a first account has logged in to the first electronic device, the first electronic device may save the updated service layout information in response to a configuration saving operation.

According to the above technical solution, a first electronic device receives an interface configuration operation of a user to adjust a layout of functional areas of multiple services in a service interface. In response to the interface configuration operation of the user, the first electronic device may adjust the layout of the functional areas of the multiple services in the service interface and update service layout information. In this way, the user of the first electronic device may adjust a layout of the service interface as required and save the adjusted layout result.

It should be noted that the first electronic device may be used by multiple users. The different users have different layout habits for the service interface, possibly causing each of the users to adjust the layout of the service interface every time he use the first electronic device.

In some embodiments, multiple accounts are stored in the first electronic device, and each of the accounts corresponds to one piece of service layout information. When a target account has logged in to the first electronic device, the first electronic device may obtain service layout information corresponding to the target account. The target account is any one of the multiple accounts. Afterwards, the first electronic device may display a service interface according to the service layout information corresponding to the target account.

In an example, in a case that an account A corresponds to the service layout information listed in table 1 and table 1 corresponds to the layout of the service interface shown in FIG. 4, the first electronic device may display the service interface 301 shown in FIG. 4 after the account A logs in to the first electronic device. In a case that an account B corresponds to the service layout information listed in table 2, and table 2 corresponds to the layout of the service interface shown in FIG. 8, the first electronic device may display the service interface 701 shown in FIG. 8 after the account B logs in to the first electronic device.

According to the above technical solution, a first electronic device may display a service interface according to service layout information corresponding to a target account. In this way, the service interface may be configured in conjunction with an account of a user.

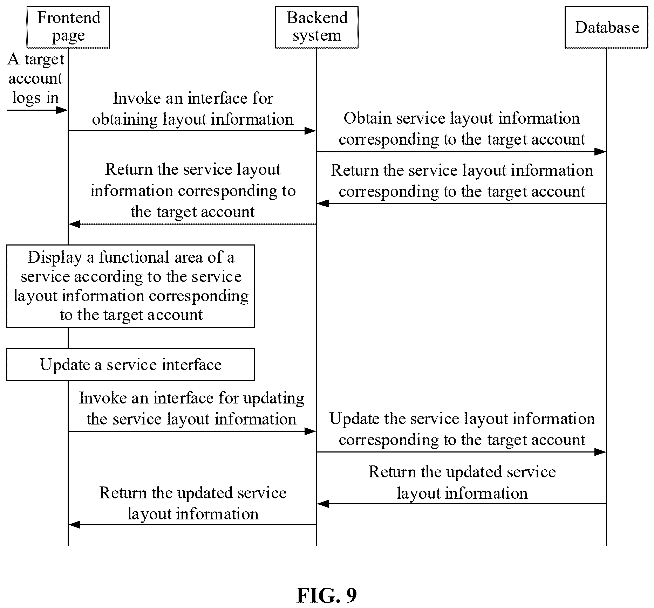

The following describes a process of displaying a service interface and updating the service interface according to the embodiments of the present disclosure in conjunction with examples. As shown in FIG. 9, after a target account logs in, a frontend page of a first electronic device may invoke an interface configured to obtain layout information. A backend system of the first electronic device may obtain service layout information corresponding to a target account from a database, and the database may return the service layout information for the target account to the backend system. The backend system may return the service layout information corresponding to the target account to the frontend page. The first electronic device may cache the service layout information and display functional areas of services on the frontend page according to the service layout information corresponding to the target account. The frontend page of the first electronic device may receive an interface configuration operation of a user, update a layout of functional areas of services, and generate layout change information. The first electronic device may invoke an interface configured to update layout information, and the backend system updates the service layout information in the database. The database may return an update result to the backend system and the frontend page.

It should be noted that a second electronic device uploads information related to the first electronic device to a blockchain, and this might cause other device to obtain the information related to the first electronic device from the blockchain, resulting in poor privacy of the information.

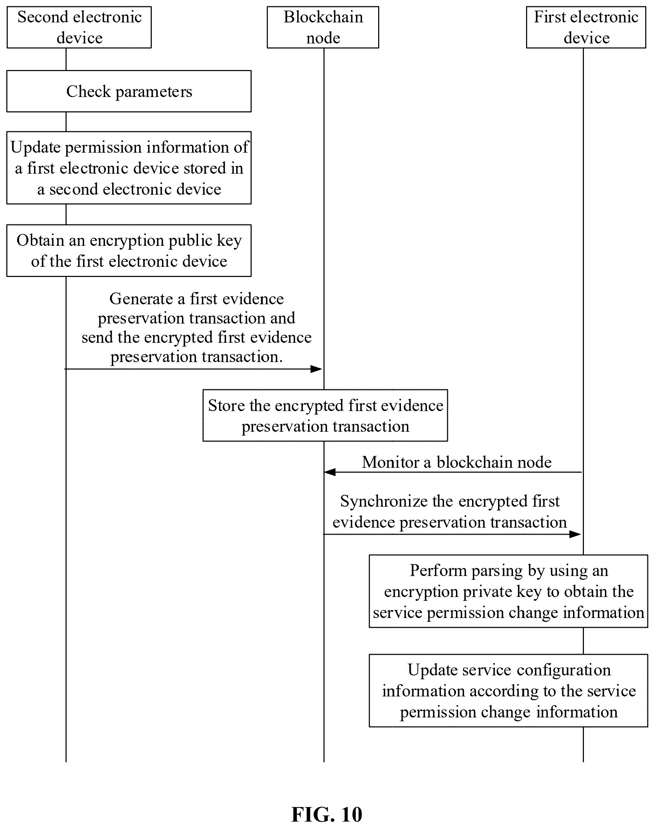

In some embodiments, as shown in FIG. 10, a second electronic device may update stored permission information of a first electronic device. The second electronic device may obtain an encryption public key of the first electronic device. The second electronic device may generate a first evidence preservation transaction, encrypt the first evidence preservation transaction by using the encryption public key, and upload the encrypted first evidence preservation transaction to a blockchain node. The blockchain node may store the encrypted first evidence preservation transaction. Further, the first electronic device may monitor the blockchain node and obtain the encrypted first evidence preservation transaction. The first electronic device may parse the first evidence preservation transaction by using an encryption private key of the first electronic device to obtain service permission change information. The first electronic device may update service configuration information according to the service permission change information.

It should be noted that the encryption public key of the first electronic device corresponds to the encryption private key of the first electronic device. The first electronic device may send the encryption public key of the first electronic device to the second electronic device for storage.

In some embodiments, before the second electronic device obtains the encryption public key of the first electronic device, the second electronic device may check parameters (such as service permission change information, an identification of the first electronic device, the encryption public key of the first electronic device, or the like).

It should be understood that after the second electronic device uploads the service permission change information encrypted using the encryption public key of the first electronic device to the blockchain node, only the first electronic device is capable of performing decryption by using the encryption private key to obtain the service permission change information. In this way, the privacy of information may be improved.

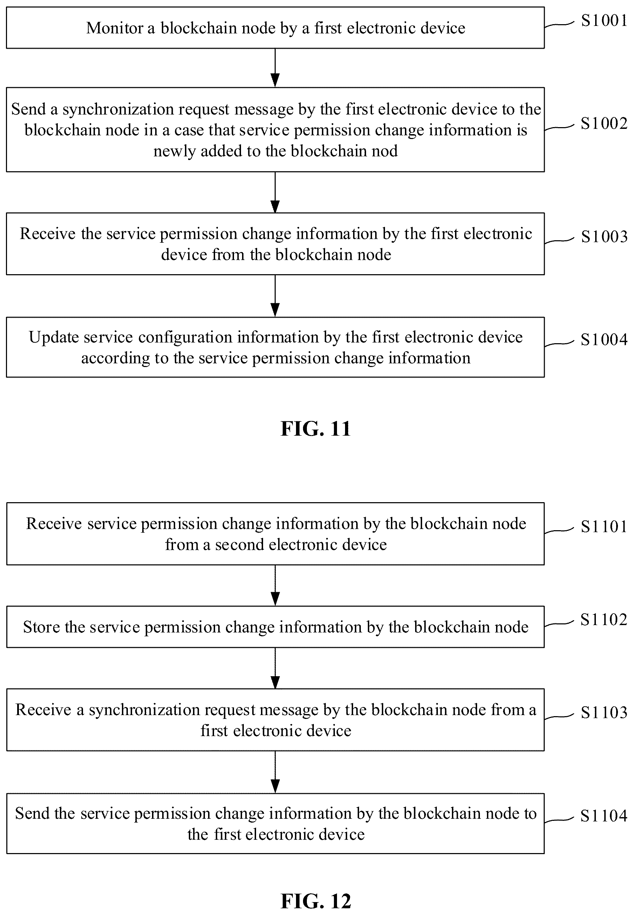

In some embodiments, as shown in FIG. 11, a method for service permission management may include the following steps S1001 to S1004.

In step S1001, a blockchain node is monitored by a first electronic device.

In step S1002, when service permission change information is newly added to the blockchain node, a synchronization request message is sent by the first electronic device to the blockchain node.

In step S1003, the service permission change information is received by the first electronic device from the blockchain node.

In step S1004, service configuration information is updated by the first electronic device according to the service permission change information.

For steps S1001 to S1004, reference can be made to steps S205 to S210, respectively, which will not be repeated herein.

According to the above technical solution, a blockchain node is monitored by a first electronic device. When service permission change information is newly added to the blockchain node, the first electronic device sends a synchronization request message to the blockchain node. The blockchain node stores service permission change information configured by a second electronic device. The second electronic device may be an electronic device of a regulator. The first electronic device may receive the service permission change information from the blockchain node. The first electronic device may update service configuration information according to the service permission change information. The service configuration information includes display permission information of a service, and the updated service configuration information includes changed display permission information of a first service. In this way, the first electronic device may make targeted adjustments to certain service usage permissions in conjunction with a service usage permission configured by the second electronic device.

In some embodiments, as shown in FIG. 12, the method for service permission management may include the following steps S1101 to S1104.

In step S1101, service permission change information is received by a blockchain node from a second electronic device.

In step S1102, the service permission change information is stored by the blockchain node.

In step S1103, a synchronization request message is received by the blockchain node from a first electronic device.

In step S1104, the service permission change information is sent by the blockchain node to the first electronic device.

For steps S1101 to S1104, reference can be made to steps S203, S204, S207, and S208, respectively, which will not be repeated herein.

It should be understood that the second electronic device uploads the service permission change information to the blockchain node, and the first electronic device may obtain the service permission change information from the blockchain node. In this way, the first electronic device is able to synchronize the service permission change information in time, strengthening the supervision on the first electronic device by the second electronic device.

Hereinabove, the solution according to the embodiments of the present disclosure is described mainly from a perspective of the method. To achieve the above functions, an apparatus for service permission management or an electronic device includes hardware structures and/or software modules to execute respective functions. Those skilled in the art should easily realize that the present disclosure can be implemented in the form of hardware or a combination of hardware and computer software, in connection with the units and algorithmic steps of the various examples described in the embodiments provided herein. Whether a function is to be performed by hardware or by hardware driven by computer software depends on a specific application and design constraints of the technical solution. Those skilled in the art may use different methods to implement the described functions for each specific application, but such implementation should not be regarded as exceeding the scope of the present disclosure.

The embodiments of the present disclosure may exemplarily divide functional modules of an apparatus for service permission management or an electronic device according to the above described method. For example, the apparatus for service permission management or the electronic device may include all functional modules corresponding to respective functions, or one integrated processing module corresponding to two or more functions. The above integrated module may be implemented in a form of hardware, or may be implemented in a form of software functional module. It should be noted that the division of modules in the embodiments of the present disclosure is schematic, which is only a logical function division, and the division may be in other forms in actual implementation.

For example, an apparatus for service permission management is also provided according to an embodiment of the present disclosure.

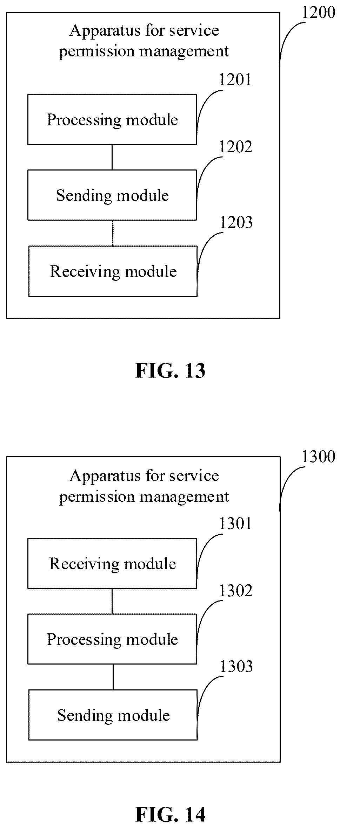

FIG. 13 is a block diagram of an apparatus for service permission management according to one or more embodiments. Referring to FIG. 13, the apparatus for service permission management 1200 is applied to a first electronic device. The first electronic device is an electronic device of a service executor. The apparatus 1200 for service permission management includes a processing module 1201, a sending module 1202, and a receiving module 1203.

The processing module 1201 is configured to monitor a blockchain node in which multiple smart contracts corresponding one-to-one to services are stored. The sending module 1202 is configured to, when service permission change information is newly added to the blockchain node, send a synchronization request message to the blockchain node. The synchronization request message is to request service permission change information. The service permission change information is to indicate a change in a service permission for a first service. The blockchain node stores the service permission change information configured by a second electronic device. The receiving module 1203 is configured to receive the service permission change information from the blockchain node. The processing module 1201 is also configured to update service configuration information according to the service permission change information. The updated service configuration information includes changed service permission information of the first service.

In some embodiments, the service configuration information includes usage permission information of a service. The receiving module 1203 is also configured to receive a service processing request. The service processing request is to request processing a target service. The processing module 1201 is also configured to, in response to the service processing request, determine usage permission information of the target service from the updated service configuration information. The sending module 1202 is also configured to, when the usage permission information of the target service indicates that the target service is supported, send a contract invocation request to the blockchain node. The contract invocation request is to request invoking a smart contract for the target service.

In other embodiments, the service configuration information includes display permission information of a service. The updated service configuration information includes changed display permission information of the first service. Display permission information is to indicate whether to display a functional area of a service. The processing module 1201 is also configured to update a service interface according to the updated service configuration information, herein the functional area of the first service is displayed in the updated service interface, or the functional area of the first service is hidden in the updated service interface. Functional areas of services correspond one-to-one to service permissions.

In other embodiments, the processing module 1201 is also configured to set display permission information of the first service in the service configuration information to a first identifier when service permission change information indicates that the first electronic device supports the first service. A first identifier is to indicate display of a functional area. The processing module 1201 is also configured to set the display permission information of the first service in the service configuration information to a second identifier when the service permission change information indicates that the first electronic device does not support the first service. A second identifier is to indicate hiding of a functional area.

In other embodiments, the service configuration information also includes multiple functional modules with one functional module corresponding to one service. The processing module 1201 is also configured to add a functional module for the first service when the service permission change information indicates that the first electronic device supports the first service. The processing module 1201 is also configured to delete the functional module for the first service when the service permission change information indicates that the first electronic device does not support the first service.

In other embodiments, the service permission change information also indicates a change in a service limit permission for the first service, and the service configuration information also includes limit permission information of the service and usage permission information of the service. The processing module 1201 is also configured to update the limit permission information of the first service and the usage permission information of the first service according to the service permission change information.

In other embodiments, a second electronic device is an electronic device that supervises service a usage permission of a first electronic device.

FIG. 14 is a block diagram of an apparatus for service permission management according to one or more embodiments. Referring to FIG. 14, the apparatus 1300 for service permission management is applied to a blockchain node in which multiple smart contracts corresponding one-to-one to services are stored. The apparatus 1300 for service permission management includes a receiving module 1301, a processing module 1302, and a sending module 1303.

The receiving module 1301 is configured to receive service permission change information from a second electronic device. The service permission change information is to indicate a change in a service usage permission for a first service. The processing module 1302 is configured to store the service permission change information. The receiving module 1301 is configured to receive a synchronization request message from a first electronic device. The synchronization request message is to request the service permission change information. The sending module 1303 is configured to send the service permission change information to the first electronic device. The first electronic device is an electronic device of a service executor.

In some embodiments, the receiving module 1301 is also configured to receive a service change message from the second electronic device. The service change message is to indicate addition/revocation of a second service. The processing module 1302 is also configured to generate a smart contract for the second service when the service change message indicates addition of the second service. The processing module 1302 is also configured to delete the smart contract for the second service when the service change message indicates revocation of the second service.

In other embodiments, the second electronic device is an electronic device that supervises a service usage permission of the first electronic device.

With regard to the apparatus in the above mentioned embodiments, the mode in which each module performs an operation is described in detail in the embodiments related to the method, which is not repeated herein.

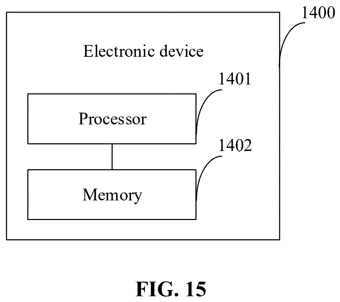

FIG. 15 is a block diagram of an electronic device according to one or more embodiments. As shown in FIG. 15, an electronic device 1400 includes, but not limited to, a processor 1401 and a memory 1402.

The memory 1402 is configured to store instructions executable by the processor 1401. It should be understood that the processor 1401 is configured to execute the instructions to implement the method for service permission management according to the above embodiments.

It should be noted that those skilled in the art should understand that the structure of an electronic device shown in FIG. 15 does not constitute a limitation on the electronic device. The electronic device may include more or less components than that shown in FIG. 15. Alternatively, some components may be combined or components may be arranged differently.

The processor 1401 is a control center of an electronic device, and is connected to various parts of the entire electronic device by using various interfaces and lines. By running or executing a software program and/or module stored in the memory 1402, and invoking data stored in the memory 1402, various functions of the electronic device are executed and data processing is performed, thereby monitoring the entire electronic device. The processor 1401 may include one or more processing units. In some embodiments, the processor 1401 may integrate an application processor and a modem processor. The application processor is mainly configured to process an operating system, a user interface, an application, and the like. The modem processor is mainly configured to process wireless communication. It may be understood that the modem processor may not be integrated into the processor 1401.

The memory 1402 may be configured to store a software program and various data. The memory 1402 may mainly include a program memory zone and a data memory zone. An operating system, a computer program required by at least one functional module (such as a receiving module, an obtaining module, or a payment module) and the like may be stored in the program memory zone. In addition, the memory 1402 may include a high-speed random access memory, and may also include a non-volatile memory, such as at least one disk storage device, a flash memory device, or other volatile solid state storage devices.

According to an exemplary embodiment, a computer-readable storage medium (for example, a non-transitory computer-readable storage medium), such as the memory 1402 in which instructions are stored, is also provided. The instructions, when executed by the processor 1401 of the electronic device 1400, cause the processor 1401 to implement the method for service permission management described in the above embodiments.

In an implementation, processing functions of the processing module 1201, the sending module 1202, the receiving module 1203, the receiving module 1301, the processing module 1302, and the sending module 1303 may be implemented by the processor 1401 through invoking the computer program stored in the memory 1402 shown in FIG. 15. An execution process may refer to the description of the method for service permission management in the above embodiments, which will not be repeated herein.

In some embodiments, the computer-readable storage medium may be a non-transitory computer-readable storage medium, for example, the non-transitory computer-readable storage medium may be a Read-Only Memory (ROM), a Random Access Memory (RAM), a CD-ROM, a magnetic tape, a floppy disk, or an optical data storage device.

In an exemplary embodiment of the present disclosure, a computer program product including one or more instructions is also provided. The one or more instructions may be executed by the processor 1401 of the electronic device 1400 to cause the processor 1401 to perform the method of service permission management described in the above embodiments.

It should be noted that the instructions stored in the computer-readable storage medium or the one or more instructions included in the computer program product, when executed by the processor 1401 of the electronic device 1400, cause the processor 1401 to perform the various processes of the embodiments of the method for service permission management, which achieves the same technical effect as the above-described method and is not repeated herein, in order to avoid repetition.

Those skilled in the art can clearly understand from the above implementations that, for convenience and conciseness of description, the division of functional modules only is described as an example. In actual applications, the functions may be allocated to different functional modules as required. That is, the internal structure of the apparatus is divided into different functional modules, to implement all or part of the functions described above.

In the embodiments of the present disclosure, it should be understood that the disclosed apparatus and method may be implemented in other forms. For example, the embodiments of the apparatus described above are only illustrative. For example, the division of the modules or units is only a logical function division, and there may be other division manners in actual implementation. For example, multiple units or components may be combined or integrated into another apparatus, or some features may be omitted or not implemented. In addition, the mutual couplings or direct couplings or communication connections shown or discussed above may be indirect couplings or communication connections through some interfaces, apparatuses or units, and may be in electrical, mechanical or other forms.

The units described as separation parts may be or may not be physically separated. The part shown as a unit may be or may not be a physical unit. That is, the units may be arranged at a same place, or may be distributed to multiple places. Some or all of the units therein may be selected according to actual needs to implement the objectives of the embodiment of the present disclosure.

In addition, the functional units in the various embodiments according to the present disclosure may be integrated into one processing unit, or the units may separate physically, or two or more units may be integrated into one unit. The integrated unit may be implemented in a form of hardware, or in a form of a software function unit.

In a case that the integrated unit is implemented in the form of a software functional unit and functions as an independent product for sale or use, the integrated unit may also be stored in a readable storage medium. Based on such understanding, the technical solution according to the embodiments of the present disclosure is essentially or part of the technical solution that make contribution to the conventional technology or all or part of the technical solution may be embodied in a form of a software product, and the software product is stored in a storage medium. The software product includes several instructions for enabling a device (which may be a single-chip microcomputer, a chip, or the like) or a processor to execute all or part of the steps of the method described in the various embodiments of the present disclosure. The above-mentioned storage medium includes a USB flash drive, a removable hard disk, a ROM, a RAM, a magnetic disk, an optical disk, or other medium capable of storing program codes.

The above are only specific implementations according to the present disclosure, but the protection scope of the present disclosure is not limited thereto. Modifications and substitutions within the technical scope disclosed in the present disclosure shall fall within the protection scope of the present disclosure. Therefore, the protection scope of the present disclosure is defined by the claims.

## Claims

1. A method for service permission management, applied to a first electronic device, wherein the first electronic device is an electronic device of a service executor and the method comprises:
monitoring a blockchain node, in which a plurality of smart contracts corresponding one-to-one to services are stored;
sending a synchronization request message to the blockchain node when service permission change information is newly added to the blockchain node, wherein
the synchronization request message is to request the service permission change information, and the service permission change information is to indicate a change in a service permission for a first service; and
the service permission change information configured by a second electronic device is stored in the blockchain node;
receiving the service permission change information from the blockchain node; and
updating service configuration information according to the service permission change information, wherein the updated service configuration information comprises changed service permission information of the first service.

2. The method according to claim 1, wherein the service configuration information comprises usage permission information of a service and the method further comprises:
receiving a service processing request, wherein the service processing request is to request for processing a target service;
determining, in response to the service processing request, usage permission information of the target service from the updated service configuration information; and
sending, when the usage permission information of the target service indicates that the target service is supported, a contract invocation request to the blockchain node, wherein the contract invocation request is to request for invoking a smart contract for the target service.

3. The method according to claim 1 or 2, wherein the service configuration information comprises display permission information of a service, the updated service configuration information comprises changed display permission information of the first service, and the display permission information is to indicate whether to display a functional area of the service.

4. The method according to claim 3, further comprising:
updating a service interface according to the updated service configuration information, wherein
a functional area of the first service is displayed on the updated service interface, or the functional area of the first service is hidden on the updated service interface; and
functional areas of the services correspond one-to-one to service permissions.

5. The method according to claim 4, wherein the updating service configuration information according to the service permission change information comprises:
setting the display permission information of the first service in the service configuration information to a first identifier when the service permission change information indicates that the first electronic device supports the first service information, wherein the first identifier is to indicate display of a functional area;
setting the display permission information of the first service in the service configuration information to a second identifier when the service permission change information indicates that the first electronic device does not support the first service information, wherein the second identifier is to indicate hiding of the functional area.

6. The method according to any one of claims 1 to 5, wherein the service configuration information further comprises a plurality of functional modules and one of the plurality of functional modules corresponds to one service.

7. The method according to claim 6, wherein the updating service configuration information according to the service permission change information comprises:
adding a functional module for the first service when the service permission change information indicates that the first electronic device supports the first service information;
deleting the functional module corresponding to the first service when the service permission change information indicates that the first electronic device does not support the first service information.

8. The method according to any one of claims 1 to 7, wherein the service permission change information is further to indicate a change in a service limit permission for the first service and the service configuration information further comprises limit permission information of a service and usage permission information of the service.

9. The method according to claim 8, wherein the updating service configuration information according to the service permission change information comprises:
updating limit permission information of the first service and usage permission information of the first service according to the service permission change information.

10. The method according to any one of claims 1 to 9, wherein the second electronic device is an electronic device that supervises a service usage permission of the first electronic device.

11. A method for service permission management, applied to a blockchain node, wherein the blockchain node is configured to store a plurality of smart contracts corresponding one-to-one to services and the method comprises:
receiving service permission change information from a second electronic device, wherein the service permission change information is to indicate a change in a service usage permission for a first service;
storing the service permission change information;
receiving a synchronization request message from a first electronic device, wherein the synchronization request message is to request the service permission change information; and
sending the service permission change information to the first electronic device, wherein the first electronic device is an electronic device of a service executor.

12. The method according to claim 11, further comprising:
receiving a service change message from the second electronic device, wherein the service change message is to indicate addition or revocation of a second service; and
generating a smart contract for the second service when the service change message indicates addition of the second service; or
deleting the smart contract for the second service when the service change message indicates revocation of the second service.

13. An apparatus for service permission management, applied to a first electronic device, wherein the first electronic device is an electronic device of a service executor and the apparatus comprises:
a processing module, configured to monitor a blockchain node, in which a plurality of smart contracts corresponding one-to-one to services are stored;
a sending module, configured to: send a synchronization request message to the blockchain node when service permission change information is newly added to the blockchain node, wherein the synchronization request message is to request the service permission change information, the service permission change information is to indicate a change in a service permission for a first service, and the service permission change information configured by a second electronic device is stored in the blockchain node; and
a receiving module, configured to receive the service permission change information from the blockchain node;
wherein the processing module is further configured to update service configuration information according to the service permission change information, and the updated service configuration information comprises changed service permission information of the first service.

14. A service permission management apparatus, applied to a blockchain node, wherein the blockchain node is configured to store a plurality of smart contracts corresponding one-to-one to services and the apparatus comprises:
a receiving module, configured to receive service permission change information from a second electronic device, wherein the service permission change information is to indicate a change in a service usage permission for a first service;
a processing module, configured to store the service permission change information;
wherein the receiving module is further configured to receive a synchronization request message from a first electronic device and the synchronization request message is to request the service permission change information; and
a sending module, configured to send the service permission change information to the first electronic device, wherein the first electronic device is an electronic device of a service executor.

15. An electronic device, comprising:
a processor; and
a memory, configured to store instructions executable by the processor, wherein
the processor is configured to, when executing the instructions, perform the method according to any one of claims 1 to 10.

16. A non-transitory computer-readable storage medium, storing computer-executable instructions, wherein the computer-executable instructions, when executed by a processor of an electronic device, cause the electronic device to perform the method according to any one of claims 1 to 10.
